(19) Europäisches Patentamt
European Patent Office
Office européen des brevets

(11) **EP 2 702 676 B1**

(12) **EUROPÄISCHE PATENTSCHRIFT**

(45) Veröffentlichungstag und Bekanntmachung des Hinweises auf die Patenterteilung:
**03.06.2020 Patentblatt 2020/23**

(51) Int Cl.:
***H02M 3/156*** *(2006.01)*      ***H02M 1/42*** *(2007.01)*

(21) Anmeldenummer: **12726716.9**

(22) Anmeldetag: **26.04.2012**

(86) Internationale Anmeldenummer:
**PCT/AT2012/000116**

(87) Internationale Veröffentlichungsnummer:
**WO 2012/145771 (01.11.2012 Gazette 2012/44)**

(54) **VERFAHREN UND SCHALTUNG ZUR LEISTUNGSFAKTORKORREKTUR**

METHOD AND CIRCUIT FOR POWER FACTOR CORRECTION

PROCÉDÉ ET DISPOSITIF DE CORRECTION DU FACTEUR DE PUISSANCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.04.2011 DE 102011100005**

(43) Veröffentlichungstag der Anmeldung:
**05.03.2014 Patentblatt 2014/10**

(73) Patentinhaber: **Tridonic GmbH & Co. KG
6851 Dornbirn (AT)**

(72) Erfinder:
• **MARENT, Günther
A-6780 Bartholomäberg (AT)**
• **KELLY, Jamie
North Shields
Tyne&Wear NE29 8AH (GB)**

(74) Vertreter: **Rupp, Christian
Mitscherlich PartmbB
Patent- und Rechtsanwälte
Sonnenstraße 33
80331 München (DE)**

(56) Entgegenhaltungen:
DE-A1-102004 025 597      DE-A1-102009 034 350
US-A1- 2005 057 237       US-A1- 2006 132 997

• **ROSETTO L ET AL: "CONTROL TECHNIQUES FOR POWER FACTOR CORRECTION CONVERTERS", PROCEEDINGS OF PEMC 1994,, 1. Januar 1994 (1994-01-01), Seiten 1310-1318, XP007920948, in der Anmeldung erwähnt**

EP 2 702 676 B1

**Beschreibung**

Die vorliegende Erfindung betrifft ein Verfahren und eine Schaltung zur Leistungsfaktorkorrektur. Insbesondere betrifft die Erfindung das technische Gebiet der Leistungsfaktorkorrektur für einen Wechselspannung/Gleichspannung-Wandler, wobei die Erfindung vorzugsweise für den Einsatz mit Betriebsgeräten bzw. elektronischen Vorschaltgeräten für Leuchtmittel geeignet ist.

Eine Leistungsfaktorkorrektur ("Power Factor Correction", PFC) wird eingesetzt, um Oberwellenströme in einem Eingangsstrom zu beseitigen bzw. zumindest zu verringern. Oberwellenströme können insbesondere bei nicht-linearen Verbrauchern, wie es beispielsweise Gleichrichter mit nachfolgender Glättung in Netzteilen sind, auftreten, da bei derartigen Verbrauchern der Eingangsstrom trotz der sinusförmigen Eingangsspannung in seiner Phase verschoben und nicht-sinusförmig verzerrt wird. Den dabei auftretenden höherfrequenten Oberschwingungen kann durch eine dem jeweiligen Gerät vorgeschaltete aktive oder getaktete Leistungsfaktorkorrektur-Schaltung entgegengewirkt werden, da die Leistungsfaktorkorrektur die nicht-lineare Stromaufnahme behebt und den Eingangsstrom so formt, dass er im Wesentlichen sinusförmig ist.

Auch Betriebsgeräte für Leuchtmittel sind nicht-linear, da sie eine Kombination aus einem Gleichrichter und einem nachgeschalteten Wechselrichter oder Gleichspannungswandler, mit dem das Leuchtmittel wie beispielsweise eine Leuchtdiode oder eine Gasentladungslampe betrieben wird, aufweisen. Zudem ist die Kennlinie des Leuchtmittels häufig nicht-linear, wobei dies beispielsweise für Gasentladungslampen, insbesondere für Leuchtstofflampen, gilt. Demzufolge werden auch bei derartigen elektronischen Vorschaltgeräten oder sonstigen Betriebsgeräten für Leuchtmittel häufig Leistungsfaktor-Korrekturschaltungen eingesetzt, wobei dies auch deshalb empfehlenswert ist, da durch Normen die zulässige Rücksendung von Oberwellen in das Versorgungsnetz geregelt ist.

Für Leistungsfaktor-Korrekturschaltungen wird häufig eine Schaltungstopologie verwendet, die auf einem auch als Hochsetzsteller oder Aufwärtswandler bezeichneten Boost-Konverter beruht. Dabei wird eine mit einer gleichgerichteten Wechselspannung versorgte Induktivität oder Spule durch Einschalten/Ausschalten eines steuerbaren Schalters mit einem Eingangsstrom geladen bzw. entladen. Der Entladestrom der Induktivität fließt über eine Diode zu dem mit einer Ausgangskapazität gekoppelten Ausgang des Konverters, so dass am Ausgang eine gegenüber der Eingangsspannung erhöhte Gleichspannung abgegriffen werden kann. Ebenso sind jedoch auch andere Konverterarten in Leistungsfaktorkorrektur-Schaltungen üblich, wie beispielsweise Flyback-Konverter oder Buck-Konverter.

Eine derartige Leistungsfaktor-Korrekturschaltung kann in verschiedenen Betriebsmodi betrieben werden, welche für einen Boost-Konverter beispielhaft in "Control Techniques For Power Factor Correction Converters", L. Rossetto, G. Spiazzi, P. Tenti, Proc. of PEMC 94, Warsaw, Poland, pp. 1310-1318, 1994 beschrieben sind. Insbesondere ist ein Betrieb mit einem kontinuierlichen Strom durch die zuvor erwähnte Induktivität (so genannter "Continuous Conduction Mode", CCM), ein Betrieb mit einem diskontinuierlichen Induktivitäts- oder Spulenstrom ("Discontinuous Conduction Mode", DCM) oder ein Betrieb im Grenzbereich zwischen kontinuierlichem und diskontinuierlichem Strom durch die Induktivität ("Borderline Conduction Mode" oder "Boundary Conduction Mode", BCM) bekannt.

Die einzelnen Betriebsmodi besitzen unterschiedliche Vorteile, so dass bevorzugt abhängig von den Betriebsbedingungen der Leistungsfaktor-Korrekturschaltung während des Betriebs zwischen den jeweiligen Betriebsmodi gewechselt wird. Hinsichtlich der weiteren Details der einzelnen bekannten Betriebsmodi wird vollinhaltlich auf die oben genannte Veröffentlichung verwiesen.

Abhängig von dem jeweils aktiven Betriebsmodus kann der Einschaltzeitpunkt für den Schalter abhängig vom Verlauf des Spulenstroms während der Entladephase gewählt werden. So wird beispielsweise beim BCM-Betrieb jedes Abfallen des Spulenstroms auf Null während der Entladephase der Spule als An-lass dafür genommen, einen neuen Schaltzyklus zu starten und den Schalter wieder einzuschalten, um die Spule erneut zu laden. Im DCM-Betrieb wird hingegen nach dem Abfallen des Spulenstroms auf Null während der Entladephase zunächst eine vorgegeben zusätzliche Zeit abgewartet, bis der Schalter erneut geschlossen wird.

Die Einschaltdauer des Schalters wird hingegen in der Regel abhängig von der Ausgangsspannung der Leistungsfaktor-Korrekturschaltung eingestellt.

Die Ausgangsspannung und der Spulenstrom können jeweils durch separate Schaltungsmittel direkt überwacht werden, was jedoch mit einer entsprechend hohem schaltungstechnischen Aufwand verbunden und kostenintensiv ist. Vorteilhafter ist es daher, wenn Schaltungsmittel verwendet werden, welche derart ausgestaltet und verschaltet sind, dass mit Hilfe dieser Schaltungsmittel einerseits eine die Ausgangsspannung repräsentierende Größe und andererseits eine den Nulldurchgang des Spulenstroms anzeigende Größe erfasst werden kann, da auf diese Weise die zur Ansteuerung des Schalters vorgesehen Steuereinheit der Leistungsfaktor-Korrekturschaltung mit einer reduzierten Anzahl an Anschlüssen ausgestaltet werden kann. Insbesondere sind im Prinzip lediglich zwei Anschlüsse ausreichend, nämlich einer zur Erfassung der von den zuvor genannten Schaltungsmitteln bereitgestellten Messgröße und einer zur Ansteuerung des Schalters. Der gesamte schaltungstechnische Aufwand und die mit der Leistungsfaktor-Korrekturschaltung verbundenen Kosten können somit deutlich reduziert werden.

Bei einer derartigen indirekten Erfassung der Ausgangsspannung der Leistungsfaktor-Korrekturschaltung kann abhängig von der Ausgestaltung und Verschaltung der oben genannten Schaltungsmittel gegebenenfalls die Ausgangsspannung bzw. die der Ausgangsspannung repräsentierende Größe nur erfasst werden, wenn die Diode leitend ist. Bei normalen Betriebsbedingungen stellt dies kein Problem dar. Kommt es jedoch zum Auftreten einer Überspannung an der Leistungsfaktor-Korrekturschaltung, wird herkömmlicher Weise die Leistungsfaktor-Korrekturschaltung automatisch abgeschaltet, so dass zwangsläufig keine Information über die Ausgangsspannung mehr zur Verfügung steht.

Das Patent-Dokument DE 10 2009 034 350 A1 offenbart ein Verfahren zur Leistungsfaktor-Korrektur nach dem Oberbegriff des Anspruchs 1 und eine Leistungsfaktor-Korrekturschaltung nach dem Oberbegriff des Anspruchs 8.

Daher liegt der vorliegenden Erfindung die Aufgabe zugrunde, ein Verfahren und eine Schaltung zur Leistungsfaktorkorrektur bereitzustellen, womit ein fortlaufender Betrieb auch bei Auftreten eines Überspannungszustands möglich ist, wobei dies insbesondere für den Fall einer indirekten Überwachung der Ausgangsspannung gilt.

Diese Aufgabe wird erfindungsgemäß durch ein Verfahren zur Leistungsfaktorkorrektur gemäß Anspruch 1 und eine Leistungsfaktor-Korrekturschaltung gemäß Anspruch 8 gelöst. Die abhängigen Ansprüche definieren vorteilhafte und bevorzugte Ausführungsformen der Erfindung.

Die erfindungsgemäße Leistungsfaktor-Korrekturschaltung umfasst eine mit einem Eingangsanschluss gekoppelte Induktivität und ein steuerbares Schaltmittel, wobei durch Schließen und Öffnen des Schaltmittels die Induktivität wahlweise geladen bzw. entladen wird. Der beim Entladen der Induktivität auftretende Entladestrom wird über eine Diode zu einem Ausgangsanschluss der Schaltung geleitet. Darüber hinaus ist eine Steuereinheit zum Ansteuern des Schaltmittels vorgesehen, wobei von der Steuereinheit zudem eine Messgröße ausgewertet wird, welche eine Ausgangsspannung der Leistungsfaktor-Korrekturschaltung repräsentiert, um durch Auswertung dieser Messgröße einen Überspannungszustand der Leistungsfaktor-Korrekturschaltung zu erkennen. Wird ein derartiger Überspannungszustand erkannt, wechselt die Steuereinheit vom Normalbetrieb in einen Überspannungsbetrieb, wobei im Überspannungsbetrieb das Schaltmittel von der Steuereinheit gezielt derart wiederholt eingeschaltet und ausgeschaltet wird, dass die Diode sicher leitend wird, d.h. kommutiert. Im leitenden Zustand der Diode kann dann wieder die der Ausgangsspannung entsprechende Messgröße erfasst werden, so dass auch bei Auftreten eines Überspannungszustands und bei einer indirekten Überwachung der Ausgangsspannung der Leistungsfaktor-Korrekturschaltung ein fortgesetzter Betrieb der Leistungsfaktor-Korrekturschaltung möglich ist. Insbesondere ist dann auch ein zuverlässiges Erkennen möglich, wann der Überspannungsbetrieb wieder verlassen werden kann.

Vorzugsweise wird von der Steuereinheit von dem Überspannungsbetrieb wieder in den normalen oder regulären Betrieb zurück gewechselt, wenn die Ausgangsspannung wieder auf einen vorgegeben Grenzwert, welcher einer gewünschten Nominalspannung entsprechen kann, abgesunken ist. Alternativ oder zusätzlich kann vorgesehen sein, dass der Überspannungsbetrieb spätestens nach Ablauf einer vorgegebenen Zeitspanne wieder verlassen wird. Gemäß einer bevorzugten Ausführungsform der vorliegenden Erfindung handelt es sich bei dem Überspannungsbetrieb um einen definierten Betriebsmodus, bei dem das Schaltmittel ähnlich zu einem "Burst"-Betrieb wiederholt mit einer vergleichsweise hohen Frequenz eingeschaltet und ausgeschaltet wird, wobei die Frequenz insbesondere im Vergleich zu dem normalen Betrieb deutlich erhöht ist. Die Frequenz und das Tastverhältnis, mit denen das Schaltmittel im Überspannungsbetrieb angesteuert wird, können variabel sein und können abhängig von der empirischen Praxiserfahrung und/oder abhängig von der jeweils angeschlossenen Last gewählt werden.

Erfindungsgemäß erfolgt die Ansteuerung des Schaltmittels im Überspannungsbetrieb derart, dass die Einschaltzeiten des Schaltmittels ausreichend lang sind, damit die Diode sicher leitend wird, während umgekehrt die Ausschaltzeiten ausreichend lang sein sollten, damit ein minimaler Energietransfer vom Eingangsanschluss. zum Ausgangsanschluss der Leistungsfaktor-Korrekturschaltung gewährleistet ist.

Als Normalbetrieb der Leistungsfaktor-Korrekturschaltung kann an sich jeder bekannte Betriebsmodus verwendet werden, wobei im Normalbetrieb vorzugsweise ein "Boundary Conduction Mode"/"Borderline Conduction Mode" (BCM-Betrieb) oder ein "Discontinuous Conduction Mode" (DCM-Betrieb) eingesetzt wird.

Im Normalbetrieb kann ein Absinken des Stroms durch die Induktivität auf einen vorgegeben Strom-Grenzwert während eines Entladens der Induktivität erfasst werden, um davon abhängig das Schaltmittel zum Starten eines erneuten Lade- und Entladevorgangs anzusteuern.

Im Normalbetrieb kann das Schaltmittel für die Dauer einer bestimmten Einschaltzeit eingeschaltet sein, anschließend ausgeschaltet und erst dann wieder eingeschaltet werden, wenn beim Entladen der Induktivität der Strom durch die Induktivität auf den Strom-Grenzwert abgesunken ist. Der Normalbetrieb kann ein Betrieb mit einem Strom durch die Induktivität im Grenzbereich zwischen einem kontinuierlichen und einem diskontinuierlichen Strom sein.

im Normalbetrieb kann das Schaltmittel für die Dauer einer bestimmten Einschaltzeit eingeschaltet sein, anschließend ausgeschaltet und erst wieder nach Ablauf einer Wartezeit bei Feststellen eines Absinkens des Stroms durch die Induktivität auf den Strom-Grenzwert beim Entladen der Induktivität eingeschaltet werden.

Vorzugsweise ist der Normalbetrieb ein Betrieb mit einem diskontinuierlichen Strom durch die Induktivität, wobei der Strom-Grenzwert vorzugsweise Null ist..

Die erfindungsgemäße Schaltung kann insbesondere zur Leistungsfaktorkorrektur für einen Wechselspannung/Gleichspannung-Wandler dienen, so dass es sich in diesem Fall bei der Eingangsspannung um eine gleichgerichtete Wechselspannung und bei der Ausgangsspannung um eine Gleichspannung handelt. Darüber hinaus ist die erfindungsgemäß Leistungsfaktor-Korrekturschaltung vorzugsweise gemäß der Topologie eines Boost-Konverters aufgebaut.

Die erfindungsgemäße Steuereinheit ist vorzugsweise in Form einer integrierten Schaltung, insbesondere einer ASIC-Schaltung, ausgestaltet und weist lediglich einen gemeinsamen Messeingang zum Erfassen einer der Ausgangsspannung entsprechenden Messgröße und einer dem Strom durch die Induktivität bzw. einem Nulldurchgang dieses Stroms entsprechenden Messgröße auf, wobei darüber hinaus ein Ausgang der Steuereinheit zum Ausgeben des Steuersignals an das vorzugsweise in Form eines FET-Schalters ausgestalteten Schaltmittel vorhanden ist, so dass die Steuereinheit mit lediglich zwei Pins konzipiert werden kann.

Ohne darauf beschränkt zu sein, ist die erfindungsgemäße Leistungsfaktor-Korrekturschaltung insbesondere zum Betrieb mit einem Betriebsgerät für ein Leuchtmittel oder zum Betrieb mit einem elektronischen Vorschaltgerät für ein Leuchtmittel ausgestaltet ist, wobei es sich bei dem Leuchtmittel um eine Entladungslampe, eine Leuchtstofflampe oder eine Leuchtdiode oder dergleichen handeln kann. Bei diesem Anwendungsfall ermöglicht die zuvor beschriebene Erfindung, dass der Betrieb der Leistungsfaktor-Korrekturschaltung durch variable Wahl der Neustart-Zeitspanne auf einfache Art und Weise an unterschiedlich ausgestaltete Betriebsgeräte oder Vorschaltgeräte bzw. unterschiedliche Lasten angepasst werden kann.

Die vorliegende Erfindung wird nachfolgend unter Bezugnahme auf die Zeichnungen anhand bevorzugter Ausführungsformen erläutert.

Fig. 1 zeigt eine Leistungsfaktor-Korrekturschaltung gemäß einem Ausführungsbeispiel der Erfindung,

Fig. 2A und Fig. 2B zeigen Darstellungen zur Erläuterung eines Normalbetriebs der Leistungsfaktor-Korrekturschaltung gemäß einem "Boundary Conduction Mode"-Betrieb (BCM) und einem "Discontinuous Conduction Mode"-Betrieb (DCM), und

Fig. 3 zeigt Darstellungen zur Verdeutlichung der Funktionsweise der Leistungsfaktor-Korrekturschaltung in einem Überspannungsbetrieb.

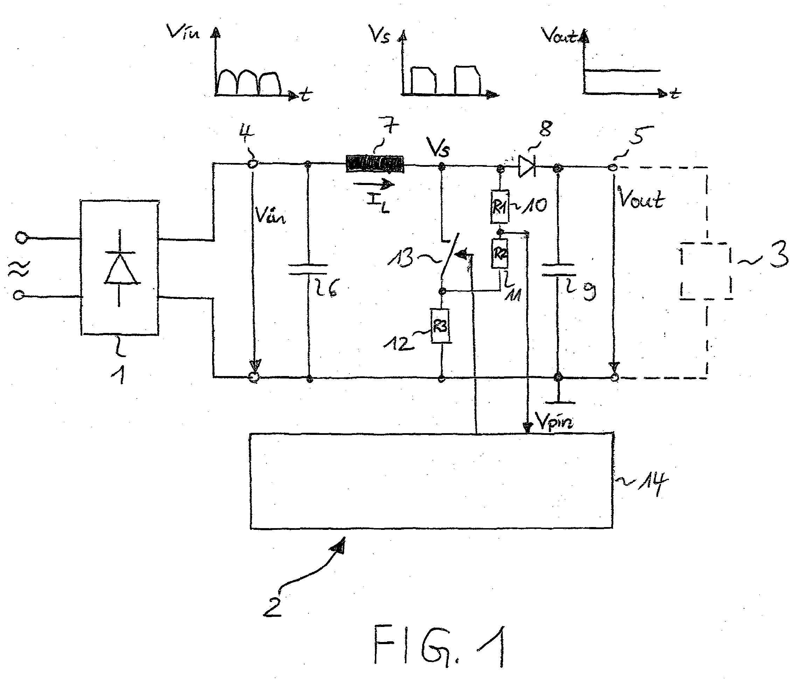

In Fig. 1 ist eine Leistungsfaktor-Korrekturschaltung 2 für einen Wechselspannung/Gleichspannung-Wandler gemäß einem bevorzugten Ausführungsbeispiel der vorliegenden Erfindung dargestellt.

Dabei wird in Fig. 1 davon ausgegangen, dass eine Versorgungs-Wechselspannung, beispielsweise die Netzspannung, von einem Gleichrichter 1 in eine gleichgerichtete Wechselspannung umgesetzt wird, welche somit als Eingangs-Wechselspannung Vin zwischen einem Eingangsanschluss 4 der Leistungsfaktor-Korrekturschaltung 2 und Masse anliegt. Die Eingangs-Wechselspannung Vin wird von einem Glättungskondensator 6 gefiltert und einer Induktivität oder Spule 7 zugeführt. Die Induktivität 7 ist mit einer Diode 8 zwischen dem Eingangsanschluss 4 und einem Ausgangsanschluss der Leistungsfaktor-Korrekturschaltung in Serie geschaltet. An dem mit einem Ausgangs-Gleichspannungskondensator 9 gekoppelten Ausgangsanschluss 5 wird eine Ausgangs-Gleichspannung Vout bereitgestellt.

Die Ausgangs-Gleichspannung Vout dient zur Versorgung einer Last 3, welcher die Leistungsfaktor-Korrekturschaltung 2 vorgeschaltet ist. Bei der Last kann es sich beispielsweise um ein Betriebsgerät oder ein elektronisches Vorschaltgerät für ein Leuchtmittel wie beispielsweise eine Leuchtstofflampe, eine Halogen-Lampe, eine Leuchtdiodenanordnung etc. handeln.

An die Verbindung zwischen der Induktivität 7 und der Diode 8 ist ein steuerbarer elektronischer Schalter 13, welcher beispielsweise in Form eines Feldeffekttransistors realisiert sein kann, angeschlossen, wobei der Schalter 13 bei der dargestellten Ausführungsform über einen Shunt-Widerstand 12 mit Masse verbunden ist. Parallel zu dem Schalter 13 ist eine Serienschaltung aus zwei Widerständen 10, 11 angeschlossen, welche mit einem Verbindungspunkt zwischen dem Schalter 13 und dem Shunt-Widerstand 12 verbunden ist. Die Widerstände 10, 11 weisen gegenüber dem Shunt-Widerstand 12 vorzugsweise deutlich größere Widerstandswerte auf.

Im eingeschalteten Zustand des Schalters 13 ist die Induktivität 7 über den Schalter 13 und den Shunt-Widerstand 12 mit Masse verbunden, wobei die Diode 8 sperrt, so dass die Induktivität 7 aufgeladen und Energie in der Induktivität gespeichert wird. Ist hingegen der Schalter 13 ausgeschaltet, d.h. offen, ist die Diode 8 leitend, so dass sich die Induktivität 7 über die Diode 8 in den Ausgangskondensator 9 entladen kann und die in der Induktivität 7 gespeicherte Energie in den Ausgangskondensator 9 übertragen wird.

Der Schalter 13 wird von einer Steuereinheit 14 angesteuert, welche vorzugsweise in Form einer integrierten Schaltung, insbesondere in Form eines ASIC, ausgestaltet ist. Die Leistungsfaktorkorrektur wird durch wiederholtes Ein- und Ausschalten des Schalters 13 mit einer deutlich höheren Frequenz als die Frequenz der gleichgerichteten Eingangs-Wechselspannung Vin erzielt. Die Frequenz der Einschalt- und Ausschaltvorgänge des Schalters 13 und somit der Lade- und Entladezyklen der Induktivität 7 kann typischerweise im Bereich mehrerer 10kHz liegen.

Bei der in Fig. 1 dargestellten Ausführungsform der Leistungsfaktor-Korrekturschaltung 2, welche auf der Topologie eines Boost-Konverters beruht (so dass die Ausgangsspannung Vout größer als die Eingangsspannung Vin ist), erfolgt das gezielte Ein- und Ausschalten des Schalters 13 abhängig von dem Nulldurchgang des durch die Induktivität 7 fließenden Stroms $I_L$ und die Bestimmung der entsprechenden Einschaltdauer abhängig von der Ausgangsspannung Vout. In bestimmten Betriebsmodi , insbesondere im so genannten "Continuous Conduction Mode" mit einem kontinuierlichen Strom durch die Induktivität 7, kann jedoch auch ein Schalten abhängig von dem Erreichen anderer Strom-Grenzwerte erfolgen.

Bei der in Fig. 1 gezeigten Ausführungsform kann sowohl die Ausgangsspannung Vout als auch der Strom $I_L$ durch die Induktivität 7 mit Hilfe lediglich einer Messschaltung überwacht werden, welche die bereits zuvor erwähnten Widerstände 10 und 11 und den Shunt-Widerstand 12 umfasst, wobei ein Eingang der Steuereinheit 14 mit einem Messpunkt zwischen den beiden Widerständen 10, 11 verbunden ist. Die Widerstandswerte der Widerstände 10-12 sind in Fig. 1 mit R1, R2 bzw. R3 bezeichnet.

Während des Einschaltens des Schalters 13 steigt der Strom $I_L$ durch die Induktivität 7 linear an, wobei der Strom $I_L$ über den Schalter 13 und den Shunt-Widerstand 12 nach Masse fließt, so dass der Spannungsabfall am Shunt-Widerstand 12 ein Maß für den Ladestrom und damit für den durch den Schalter 13 fließenden Strom ist. Da in der Ladephase der eingeschaltete Schalter 13 die Serienschaltung aus den Widerständen 10 und 11 kurzschließt, ist somit die an dem Eingang der Steuereinheit 14 anliegende Spannung Vpin ein Maß für den durch den Schalter 13 fließenden Strom $I_L$. Insbesondere gilt in diesem Fall für die Spannung Vpin folgender Zusammenhang, wobei $V_{R3}$ die am Shunt-Widerstand 12 abfallende Spannung bezeichnet:

$$Vpin = V_{R3} * R1/(R1+R2)$$

Mit der Annahme R3 « R2 und R1 » R2 gilt somit im eingeschalteten Zustand des Schalters 13:
Vpin = $V_{R3}$

Wird der Schalter 13 ausgeschaltet, sinkt der Strom $I_L$ durch die Induktivität 7 wieder linear ab und fließt über die Diode 8 zu der Last 3. Die Diode 8 ist während der Entladephase leitend, wobei sich die Ausgangsspannung Vout von der am Verbindungspunkt zwischen der Induktivität 7 und der Diode 8 auftretenden Spannung Vs, d.h. der Schalterspannung, geringfügig um den Spannungsabfall an der Diode 8 unterscheidet. Im ausgeschalteten Zustand des Schalters 13 gilt somit näherungsweise folgender Zusammenhang:

$$Vpin = Vout *(R2+R3)/(R1+R2+R3)$$

Mit der obigen Annahme R3 « R2 und R1 » R2 gilt für den ausgeschalteten Zustand des Schalters 13:

$$Vpin = Vout *R2/(R1+R2)$$

Der Spannungsunterschied zwischen der Ausgangsspannung Vout und der Spannung Vs wird erst dann signifikant, wenn sich der Entladestrom $I_L$ der Nulllinie nähert bzw. diese kreuzt. Bei diesem auch als "Zero Crossing Detection" (ZCD) bezeichneten Ereignis zeigt die am Verbindungspunkt zwischen der Induktivität 7 und dem Schalter 13 anliegende Spannung Vs einen nach unten gerichteten Spannungsknick, während die Ausgangsspannung nahezu unverändert bleibt. Die während der Entladephase am Eingang der Steuereinheit 14 anliegende Spannung ist ein Maß für die über die Serienschaltung der Wider-stände 10-12 abfallende Spannung. Von der Steuereinheit 14 kann somit während des größten Teils der Entladephase durch Überwachung dieser Spannung die Ausgangsspannung Vout und am Ende der Entladephase ein ZCD-Ereignis bzgl. des Stroms $I_L$ detektiert werden.

Beispielhafte Verläufe für die Eingangsspannung Vin, die Schalterspannung Vs und die Ausgangsspannung Vout sind in Fig. 1 dargestellt.

Die Steuereinheit 14 kann mit der Information über den Istwert der Ausgangsspannung Vout die nächste Einschaltdauer für den Schalter 13 bestimmen, wobei dies beispielsweise auf Grundlage eines Vergleichs der gemessenen Ausgangsspannung Vout mit einer festen Referenzspannung erfolgen kann. Abhängig von diesem Vergleichsergebnis wird die Einschaltdauer des Schalters 13 von der Steuereinheit 14 im Sinne einer Regelung entsprechend angepasst, um die gewünschte Ausgangsspannung zu erhalten.

Das Auftreten eines ZCD-Ereignisses im Verlauf des Stroms L wird hingegen genutzt, um den nächsten Einschaltzeitpunk für den Schalter 13 zu bestimmen. Dies kann abhängig von dem jeweiligen Betriebsmodus der Leistungsfaktor-Korrekturschaltung auf unterschiedliche Art und Weise erfolgen.

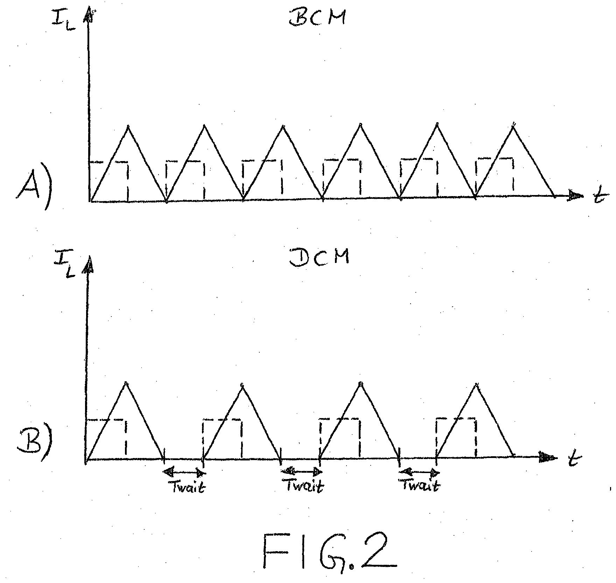

Fig. 2A zeigt beispielhaft den Verlauf des Stroms $I_L$ für den Fall eines Betriebs im Grenzbereich zwischen kontinuierlichem und diskontinuierlichem Strom ("Boundary Conduction Mode", BCM). Bei diesem Steuerkonzept wird der Schalter 13 mit einer insbesondere abhängig von dem Istwert der Ausgangsspannung Vout ermittelten Einschaltdauer eingeschaltet, wobei das Einschalten des Schalters 13 immer dann erfolgt, wenn der Strom $I_L$ durch die Induktivität 7 wieder auf Null abgesunken ist, so dass sich der in Fig. 2A gezeigte Stromverlauf ergibt. Der Zustand des Schalters 13 ist in Fig.

2A gestrichelt dargestellt. Der Konverter wird somit gleichsam im Grenzbereich zwischen einem Betrieb mit kontinuierlichem Strom und einem Betrieb mit diskontinuierlichem Strom betrieben.

Fig. 2B zeigt beispielhaft den Verlauf des Stroms $I_L$ für einen Betrieb der Leistungsfaktor-Korrekturschaltung 2 mit einem diskontinuierlichen Stromverlauf ("Discontinuous Conduction Mode", DCM). Ähnlich wie zu dem BCM-Betrieb von Fig. 2A steigt auch in diesem Fall der Strom bei Einschalten des Schalters 13 linear an, wobei jedoch bei Absinken des Stroms auf die Nulllinie nach Ausschalten des Schalters 13 nicht sofort ein neuer Schaltzyklus gestartet wird, sondern bis zum erneuten Einschalten des Schalters 13 wird eine zusätzliche Wartezeit Twait gewartet. Erst nach Ablauf dieser Wartezeit Twait wird der Schalter 13 wieder eingeschaltet, um die Induktivität 7 erneut aufzuladen. Somit ergibt sich der in Fig. 2B gezeigte diskontinuierliche Stromverlauf. Auch in Fig. 2B ist der Zustand des Schalters 13 gestrichelt angedeutet.

Wie zuvor erläutert worden ist, wird bei dem in Fig. 1 gezeigten Konzept die Information über die Ausgangsspannung Vout indirekt aus der Schalterspannung Vs bzw. der von der Messeinrichtung bestehend aus den Widerständen 10-12 bereitgestellten Spannung abgeleitet. Um auch für den Fall, dass bezüglich der Ausgangsspannung Vout ein Überspannungszustand auftritt, einen fortgesetzten Betrieb der Leistungsfaktor-Korrekturschaltung zu ermöglichen, wird von der Steuereinheit 14 bei Feststellen eines derartigen Überspannungszustands von dem regulären Betrieb in einen definierten Überspannungsbetrieb gewechselt, wobei es insbesondere das Ziel dieses Überspannungsbetriebs ist, die Diode 8 sicher leitend zu schalten, so dass weiterhin eine Überwachung der Ausgangsspannung Vout möglich ist. Insbesondere kann dann auch erkannt werden, wann wieder in den normalen Betrieb zurück gewechselt werden kann. Der Überspannungsbetrieb ist vorzugsweise derart, dass eine begrenzte Energie von dem Eingang zu dem Ausgang übertragen wird.

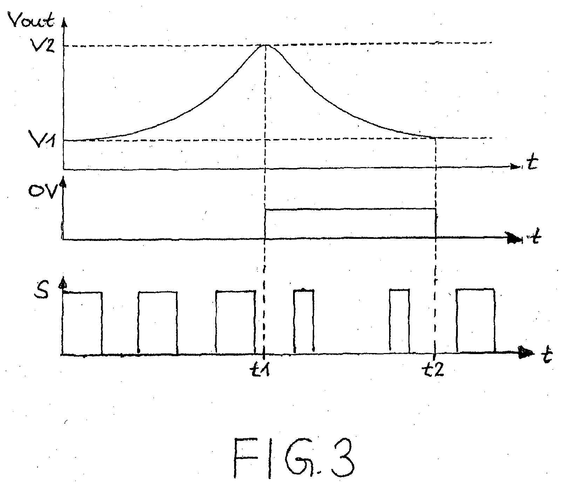

Der Überspannungsbetrieb wird nachfolgend näher anhand der Darstellungen von Fig. 3 erläutert.

Fig. 3 zeigt einen möglichen Verlauf der Ausgangsspannung Vout der Leistungsfaktor-Korrekturschaltung. Die Ausgangsspannung Vout steigt ausgehend von einer Nominalspannung V1 an und erreicht zum Zeitpunkt t1 einen Überspannungs-Grenzwert V2, wodurch der Überspannungszustand angezeigt wird, was in Fig. 3 durch Setzen eines entsprechenden Überspannungs-Flags OV angedeutet ist. Bei einer Leistungsfaktor-Korrekturschaltung für ein elektronisches Vorschaltgerät für ein Leuchtmittel kann dieser Überspannungs-Grenzwert beispielsweise im Bereich von 450V liegen, während die Nominalspannung im Bereich von 400V liegen kann.

Bei Erkennen dieses Überspannungszustands wechselt die Steuereinheit 14 in den Überspannungsbetrieb, wobei der Schalter 13 mit einer relativ niedrigen Frequenz wiederholt eingeschaltet und ausgeschaltet wird, wie es in Fig. 3 durch eine Darstellung des Schalterzustands S angedeutet ist. Vorzugsweise wird der Schalter 13 mit einer minimalen Einschaltzeit bei einer maximalen Ausschaltzeit angesteuert. Die Dauer der Schaltimpulse kann beispielsweise lediglich im Bereich von Mikrosekunden liegen, so dass es sich bei dem Überspannungsbetrieb um einen Betrieb ähnlich zu einem Burst-Modus handelt. Die Frequenz der Schaltvorgänge und das Tastverhältnis werden insbesondere derart gewählt, dass die Einschaltzeiten ausreichend lang sind, damit die Diode 8 sicher kommutiert, d.h. leitend geschaltet wird, während umgekeht die Ausschaltzeiten ausreichend lang sein sollten, damit ein minimaler Energietransfer vom Eingang zum Ausgang der Leistungsfaktor-Korrekturschaltung 2 gewährleistet ist. Die Parameter für den Überspannungsbetrieb sind in der Steuereinheit 14 hinterlegt, wobei es auch möglich ist, dass sie variabel abhängig von den Betriebsbedingungen der Schaltung, insbesondere abhängig von der jeweils angeschlossenen Last, eingestellt werden.

Gemäß Fig. 3 wird angenommen, dass die Ausgangsspannung Vout zum Zeitpunkt t2 wieder auf die gewünschte Nominalspannung V1 abgesunken ist, so dass der Überspannungsbetrieb wieder beendet und in den normalen Betrieb gewechselt wird. Ebenso kann auch eine maximale Zeitspanne für den Überspannungsbetrieb definiert sein, welche beispielsweise im Bereich von Millisekunden liegen kann, so dass spätestens nach Ablauf dieser Zeitspanne wieder in den normalen Betrieb gewechselt wird.

Für den Normalbetrieb der Leistungsfaktor-Korrekturschaltung 2 sind an sich alle bekannten Betriebsmodi möglich, so dass die in Fig. 3 für den Normalbetrieb angedeuteten Schalterzustände lediglich beispielhaft sind. Aus Fig. 3 ist jedoch ersichtlich, dass die Frequenz, mit welcher der Schalter 13 im Überspannungsbetrieb angesteuert wird, vergleichsweise niedrig ist im Verhältnis zu der Frequenz, mit welcher der Schalter 13 üblicherweise im Normalbetrieb angesteuert wird, wobei jedoch die Ausschaltzeit im Verhältnis zur Einschaltzeit deutlich länger ist.

**Patentansprüche**

1. Verfahren zur Leistungsfaktorkorrektur umfassend die Schritte:

   • Anlegen einer Eingangsspannung (Vin) an eine Induktivität (7),
   • wahlweise Laden und Entladen der Induktivität (7) in einem Normalbetrieb durch Schließen und Öffnen eines mit der Induktivität (7) gekoppelten Schaltmittels (13), wobei beim Entladen der Induktivität (7) ein Strom ($I_L$) durch die Induktivität (7) über eine Diode (8) einem Ausgangsanschluss (5) zugeführt wird, und

• Überwachen einer eine am Ausgangsanschluss (5) auftretende Ausgangsspannung (Vout) repräsentierenden Größe, um einen Überspannungszustand (OV) zu erfassen,

• wobei bei Erfassen des Überspannungszustands (OV) in einen Überspannungsbetrieb gewechselt wird, wobei in dem Überspannungsbetrieb das Schaltmittel (13) durch wiederholtes Ein- und Ausschalten derart angesteuert wird, dass die Diode (8) leitend ist,

und das Schaltmittel (13) in dem Überspannungsbetrieb mit einer niedrigeren Frequenz wiederholt eingeschaltet und ausgeschaltet wird als in dem Normalbetrieb,

• wobei das Schaltmittel (13) mit einem Verbindungspunkt zwischen der Induktivität (7) und der Diode (8) gekoppelt ist und die Ausgangsspannung (Vout) durch Erfassen einer an dem Verbindungspunkt auftretenden Spannung (Vs) indirekt überwacht wird,

• wobei das Schaltmittel (13) in dem Überspannungsbetrieb mit einer bestimmten Frequenz und einem bestimmten Tastverhältnis wiederholt eingeschaltet und ausgeschaltet wird, wobei die Frequenz und das Tastverhältnis derart gewählt werden, dass eine Einschaltzeit des Schaltmittels (13) in dem Überspannungsbetrieb lang genug ist, damit die Diode (8) leitend ist,

• dadurch gekennzeichnet, dass eine Ausschaltzeit des Schaltmittels (13) in dem Überspannungsbetrieb lang genug ist, um einen minimalen Energietransfer von einem Eingangsanschluss (4) zu dem Ausgangsanschluss (5) zu erzielen.

2. Verfahren nach Anspruch 1,
**dadurch gekennzeichnet,**
**dass** der Überspannungszustand (OV) erfasst wird, wenn die überwachte Ausgangsspannung (Vout) einen vorgegeben Grenzwert (V2) übersteigt.

3. Verfahren nach einem der vorhergehenden Ansprüche,
**dadurch gekennzeichnet,**
**dass** aus dem Überspannungsbetrieb wieder in den Normalbetrieb gewechselt wird, falls die Ausgangsspannung (Vout) auf eine Nominalspannung (V1) abgesunken ist oder falls seit dem Wechsel in den Überspannungsbetrieb eine vorgegebene Zeitspanne vergangen ist.

4. Verfahren nach einem der vorhergehenden Ansprüche,
**dadurch gekennzeichnet,**
**dass** die Frequenz und/oder das Tastverhältnis im Überspannungsbetrieb veränderbar sind.

5. Verfahren nach einem der vorhergehenden Ansprüche,
**dadurch gekennzeichnet,**
**dass** im Normalbetrieb ein Absinken des Stroms ($I_L$) durch die Induktivität (7) auf einen vorgegeben Strom-Grenzwert während eines Entladens der Induktivität (7) erfasst wird, um davon abhängig das Schaltmittel (13) zum Starten eines erneuten Lade- und Entladevorgangs anzusteuern.

6. Verfahren nach Anspruch 5,
**dadurch gekennzeichnet,**
**dass** im Normalbetrieb das Schaltmittel (13) für die Dauer einer bestimmten Einschaltzeit eingeschaltet, anschließend ausgeschaltet und erst dann wieder eingeschaltet wird, wenn beim Entladen der Induktivität (7) der Strom ($I_L$) durch die Induktivität (7) auf den Strom-Grenzwert abgesunken ist.

7. Verfahren nach Anspruch 5,
**dadurch gekennzeichnet,**
**dass** im Normalbetrieb das Schaltmittel (13) für die Dauer einer bestimmten Einschaltzeit eingeschaltet, anschließend ausgeschaltet und erst wieder nach Ablauf einer Wartezeit (Twait) bei Feststellen eines Absinkens des Stroms ($I_L$) durch die Induktivität (7) auf den Strom-Grenzwert beim Entladen der Induktivität (7) eingeschaltet wird.

8. Leistungsfaktor-Korrekturschaltung (2) umfassend

• einen Eingangsanschluss (4) ausgestaltet und eingerichtet zum Empfangen einer Eingangsspannung (Vin),
• einen Ausgangsanschluss (5) ausgestaltet und eingerichtet zum Ausgeben einer Ausgangsspannung (Vout),
• eine mit dem Eingangsanschluss (4) gekoppelte Induktivität (7),
• ein mit der Induktivität (7) gekoppeltes steuerbares Schaltmittel (13) eingerichtet und ausgestaltet um in einem Normalbetrieb der Leistungsfaktor-Korrekturschaltung (2) durch Schließen und Öffnen des Schaltmittels (13) die Induktivität (7) wahlweise zu laden und zu entladen,
• eine Diode (8), welche mit der Induktivität (7) derart verschaltet ist, dass beim Entladen der Induktivität (7) ein Strom ($I_L$) durch die Induktivität (7) über die Diode (8) dem Ausgangsanschluss (5) zugeführt wird, und
• eine Steuereinheit (14) ausgestaltet und eingerichtet zum Ansteuern des Schaltmittels (13), wobei die Steuereinheit (14) derart ausgestaltet und eingerichtet ist, dass sie durch Auswertung einer die Ausgangsspannung (Vout) repräsentierenden Größe einen Überspannungszustand (OV) erfasst,

• wobei die Steuereinheit (14) derart ausgestaltet und eingerichtet ist, dass sie bei Erfassen des Überspannungszustandes (OV) in einen Überspannungsbetrieb wechselt und in dem Überspannungsbetrieb das Schaltmittel (13) durch wiederholtes Ein- und Ausschalten derart ansteuert, dass die Diode (8) leitend ist, und das Schaltmittel (13) in dem Überspannungsbetrieb mit einer niedrigeren Frequenz wiederholt eingeschaltet und ausgeschaltet wird als in dem Normalbetrieb,

• wobei das Schaltmittel (13) mit einem Verbindungspunkt zwischen der Induktivität (7) und der Diode (8) gekoppelt ist, und eine Messeinrichtung (10-12) zum Erfassen einer an dem Schaltmittel (13) anliegenden Spannung (Vs) vorgesehen ist, wobei die Messeinrichtung (10-12) ausgestaltet und eingerichtet ist ein bereitgestelltes Ausgangssignal der Messeinrichtung (10-12) der Steuereinheit (14) als die die Ausgangsspannung (Vout) repräsentierende Größe zuzuführen,

• wobei weiterhin die Steuereinheit (14) derart ausgestaltet und eingerichtet ist:

     o dass das Schaltmittel (13) in dem Überspannungsbetrieb mit einer bestimmten Frequenz und einem bestimmten Tastverhältnis wiederholt eingeschaltet und ausgeschaltet wird, wobei die Frequenz und das Tastverhältnis derart gewählt werden, dass eine Einschaltzeit des Schaltmittels (13) in dem Überspannungsbetrieb lang genug ist, damit die Diode (8) leitend ist, und

     ◦ **dadurch gekennzeichnet, dass** eine Ausschaltzeit des Schaltmittels (13) in dem Überspannungsbetrieb lang genug ist, um einen minimalen Energietransfer von dem Eingangsanschluss (4) zu dem Ausgangsanschluss (5) zu erzielen.

9. Leistungsfaktor-Korrekturschaltung nach Anspruch 8,
**dadurch gekennzeichnet,**
**dass** die Steuereinheit (14) derart eingerichtet und ausgestaltet ist, dass sie im Normalbetrieb ein Absinken des Stroms ($I_L$) durch die Induktivität (7) auf einen vorgegeben Strom-Grenzwert während eines Entladens der Induktivität (7) erfasst, um davon abhängig das Schaltmittel (13) zum Starten eines erneuten Lade- und Entladevorgangs anzusteuern.

10. Leistungsfaktor-Korrekturschaltung (2) nach Anspruch 9,
**dadurch gekennzeichnet,**
**dass** eine mit der Steuereinheit (14) gekoppelte Erfassungseinrichtung (10-12) zum Erfassen einer einen Nulldurchgang des Stroms ($I_L$) durch die Induktivität (7) entsprechende Messgröße vorgesehen ist.

11. Leistungsfaktor-Korrekturschaltung nach Anspruch 8 und Anspruch 9,
**dadurch gekennzeichnet,**
**dass** die Messeinrichtung und die Erfassungseinrichtung gemeinsam durch einen mit dem Verbindungspunkt zwischen der Induktivität (7) und der Diode (8) gekoppelten Spannungsteiler (10-12) realisiert sind.

12. Leistungsfaktor-Korrekturschaltung (2) nach einem der Ansprüche 8 - 11,
**dadurch gekennzeichnet,**
**dass** die Steuereinheit (14) in Form einer integrierten Schaltung ausgestaltet ist.

13. Betriebsgerät (3) für ein Leuchtmittel mit einer Leistungsfaktor-Korrekturschaltung (2) nach einem der Ansprüche 8 -12.

## Claims

1. A method for power factor correction comprising the steps:

     • application of an input voltage (Vin) to an inductor (7),
     • selective charging and discharging of the inductor (7) in a normal operation by closing and opening a switch element (13) coupled with the inductor (7), wherein when the inductor (7) is discharged a current ($I_L$) is fed through the inductor (7) via a diode (8) to the output connection (5), and
     • monitoring of a value representing an output voltage ($V_{out}$) occurring at the output connection (5), in order to detect an overvoltage condition (OV),
     • wherein when the overvoltage condition (OV) is detected, a switch is made into an overvoltage operation, wherein in the overvoltage operation the switch element (13) is activated by repeated switching on and off in such a manner that the diode (8) is conductive,
     and the switch element (13) in the overvoltage operation is repeatedly switched on and switched off with a lower frequency than in the normal operation,
     • wherein the switch element (13) is coupled with a connection point between the inductor (7) and the diode (8) and the output voltage ($V_{out}$) is indirectly monitored by detection of a voltage ($V_s$) occurring at the connection point,
     • wherein the switch element (13) is repeatedly switched on and switched off in the overvoltage operation with a specific frequency and a specific duty ratio, wherein the frequency and the duty ratio are selected in such a manner that a switch-on time of the switch element (13) in the overvoltage operation is long enough, so that the diode (8) is conductive,
• **characterized in that**
a switch-off time of the switch element (13) in the overvoltage operation is long enough, in order to achieve a minimum energy transfer from an input connection (4) to the output connection (5).

2. The method according to Claim 1
**characterized in**
**that** the overvoltage condition (OV) is detected, if the monitored output voltage ($V_{out}$) exceeds a predetermined limit value ($V_2$).

3. The method according to any one of the preceding claims,
**characterized in**
**that** a switch is made from the overvoltage operation back into the normal operation, if the output voltage ($V_{out}$) has dropped to a nominal voltage ($V_1$) or if a predetermined time span has passed since the switch to the overvoltage operation.

4. The method according to any one of the preceding claims,
**characterized in**
**that** the frequency and/or the duty ratio are variable in the overvoltage operation.

5. The method according to any one of the preceding claims,
**characterized in**
**that** in the normal operation a drop in the current ($I_L$) through the inductor (7) to a predetermined current limit value is detected during a discharge of the inductor (7), in order dependent thereon to activate the switch element (13) to start a new charging and discharging process.

6. The method according to Claim 5,
**characterized in**
**that** in the normal operation the switch element (13) is switched on for the duration of a specific switch-on time, then switched off and only switched back on, when the current ($I_L$) through the inductor (7) has dropped to the current limit value when the inductor (7) is discharged.

7. The method according to Claim 5,
**characterized in**
**that** in the normal operation the switch element (13) is switched on for the duration of a specific switch-on time, then switched off and only switched back on after the expiration of a waiting time ($T_{wait}$) when a drop in the current ($I_L$) through the inductor (7) to the current limit value has been determined when the inductor (7) is discharged.

8. A power factor correction circuit (2) comprising

• an input connection (4) designed and configured for receiving an input voltage ($V_{in}$),
• an output connection (5) designed and configured for the output of an output voltage ($V_{out}$),
• an inductor (7) coupled with the input connection (4),
• a controllable switch element (13) coupled with the inductor (7) configured and designed in order to selectively charge and discharge the inductor (7) in a normal operation of the power factor correction circuit (2) by closing and opening the switch element (13),
• a diode (8), which is connected with the inductor (7) in such a manner that when the inductor (7) is discharged a current ($I_L$) is fed through the inductor (7) via the diode (8) to the output connection (5), and
• a control unit (14) designed and configured for activating the switch element (13), wherein the control unit (14) is designed and configured in such a manner that it detects an overvoltage condition (OV) through evaluation of a value representing the output voltage ($V_{out}$),
• wherein the control unit (14) is designed and configured in such a manner that when the overvoltage condition (OV) is detected it switches into an overvoltage operation and in the overvoltage operation activates the switch element (13) by repeated switching on and off in such a manner that the diode (8) is conductive, and the switch element (13) is repeatedly switched on and switched off in the overvoltage operation with a lower frequency than in the normal operation,
• wherein the switch element (13) is coupled with a connection point between the inductor (7) and the diode (8), and a measuring device (10-12) is provided for detecting a voltage ($V_s$) applied to the switch element (13), wherein the measuring device (10-12) is designed and configured to supply a provided output signal of the measuring device (10-12) to the control unit (14) as the value representing the output voltage ($V_{out}$),
• wherein, furthermore, the control unit (14) is designed and configured in such a manner:

    ◦ that the switch element (13) in the overvoltage operation is repeatedly switched on and switched off with a specific frequency and a specific duty ratio, wherein the frequency and the duty ratio are selected in such a manner that a switch-on time of the switch element (13) in the overvoltage operation is long enough so that the diode (8) is conductive, and

    ◦ **characterized in that**

a switch-off time of the switch element (13) in the overvoltage operation is long enough, in order to achieve a minimum energy transfer from the input connection (4) to the output connection (5).

9. The power factor correction circuit according to Claim 8,

    **characterized in**

    **that** the control unit (14) is configured and designed in such a manner that it detects a drop in the current ($I_L$) through the inductor (7) to a predetermined current limit value in the normal operation during a discharging of the inductor (7), in order dependent thereon to activate the switch element (13) to start a new charging and discharging process.

10. The power factor correction circuit (2) according to Claim 9,

    **characterized in**

    **that** a detection device (10-12) coupled with the control unit (14) is provided for detecting a measured value corresponding to a zero crossing of the current ($I_L$) through the inductor (7).

11. The power factor correction circuit according to Claim 8 and Claim 9,

    **characterized in**

    **that** the measuring device and the detection device are jointly realized by a voltage divider (10-12) coupled with the connection point between the inductor (7) and the diode (8).

12. The power factor correction circuit (2) according to any one of Claims 8-11,

    **characterized in**

    **that** the control unit (14) is designed in the form of an integrated circuit.

13. An operating device (3) for a lighting means with a power factor correction circuit (2) according to any one of Claims 8-12.

**Revendications**

1. Procédé pour la correction du facteur de puissance, comprenant les étapes suivantes :

    • application d'une tension d'entrée (Vin) à une inductance (7),
    • charge et décharge, sélectivement, de l'inductance (7) en fonctionnement normal par fermeture et ouverture d'un moyen de commutation (13) couplé avec l'inductance (7), moyennant quoi, lors de la décharge de l'inductance (7), un courant ($I_L$) à travers l'inductance (7) est appliqué par l'intermédiaire d'une diode (8) à une borne de sortie (5),
    • surveillance d'une grandeur représentant une tension de sortie (Vout) apparaissant au niveau de la borne de sortie (5), afin de détecter un état de surtension (OV),
    • moyennant quoi, lors de la détection de l'état de surtension (OV), on passe dans un fonctionnement en surtension, moyennant quoi, dans le fonctionnement en surtension, le moyen de commutation (13) est contrôlé par une activation et une désactivation répétées, de façon à ce que la diode (8) soit conductrice,
    et le moyen de commutation (13) étant activé et désactivé de manière répétée, dans le fonctionnement en surtension, avec une fréquence plus faible que dans le fonctionnement normal,
    • le moyen de commutation (13) étant couplé avec un point de liaison entre l'inductance (7) et la diode (8) et la tension de sortie (Vout) étant surveillée indirectement par la détection d'une tension (Vs) apparaissant au niveau du point de liaison,
    • le moyen de commutation (13) étant, dans le fonctionnement en surtension, activé et désactivé de manière répétée avec une fréquence déterminée et un rapport cyclique déterminé, la fréquence et le rapport cyclique étant choisis de façon à ce qu'un temps d'activation du moyen de commutation (13) soit suffisamment long, dans le fonctionnement en surtension, afin que la diode (8) soit conductrice,
    • **caractérisé en ce que**
    un temps de désactivation du moyen de commutation (13) dans le fonctionnement en surtension est suffisamment long afin d'obtenir un transfert d'énergie minimal entre une borne d'entrée (4) et la borne de sortie (5).

2. Procédé selon la revendication 1,

    **caractérisé en ce que**

    l'état de surtension (OV) est détecté lorsque la tension de sortie (Vout) surveillée dépasse une valeur limite (V2) prédéterminée.

3. Procédé selon l'une des revendications précédentes,

    **caractérisé en ce que**

    on passe de nouveau du fonctionnement en surtension au fonctionnement normal dans le cas où la tension de sortie (Vout) diminue jusqu'à une tension normale (V1) ou dans le cas où, depuis le passage au fonctionnement en surtension, il s'est écoulé un laps de temps prédéterminé.

**4.** Procédé selon l'une des revendications précédentes,
**caractérisé en ce que**
la fréquence et/ou le rapport cyclique peuvent être modifiés dans le fonctionnement en surtension.

**5.** Procédé selon l'une des revendications précédentes,
**caractérisé en ce que**
en fonctionnement normal, une diminution du courant ($I_L$) à travers l'inductance (7) à une valeur limite de courant prédéterminée pendant une décharge de l'inductance (7) est détectée afin de contrôler, en fonction de cela, le moyen de commutation (13) pour le démarrage d'un nouveau processus de charge et décharge.

**6.** Procédé selon la revendication 5,
**caractérisé en ce que**
en fonctionnement normal, le moyen de commutation (13) est activé pour la durée d'un temps d'activation déterminé puis est désactivé et n'est réactivé que lorsque, lors de la décharge de l'inductance (7), le courant ($I_L$) à travers l'inductance (7) a diminué jusqu'à la valeur limite du courant.

**7.** Procédé selon la revendication 5,
**caractérisé en ce que**
en fonctionnement normal, le moyen de commutation (13) est activé pour la durée d'un temps d'activation déterminé puis est désactivé et n'est réactivé, après l'écoulement d'un temps d'attente (Twait), que lors de la constatation d'une diminution du courant ($I_L$) à travers l'inductance (7) jusqu'à la valeur limite de courant lors de la décharge de l'inductance (7).

**8.** Circuit de correction de facteur de performance (2) comprenant

• une borne d'entrée (4) conçue et configurée pour la réception d'une tension d'entrée (Vin),
• une borne de sortie (5) conçue et configurée pour la génération d'une tension de sortie (Vout),
• une inductance (7) couplée à la borne d'entrée (4),
• un moyen de commutation (13) contrôlable couplé à l'inductance (7), configuré et conçu pour charger et décharger sélectivement l'inductance (7), lors du fonctionnement normal du circuit de correction du facteur de puissance (2), par ouverture et fermeture du moyen de commutation (13),
• une diode (8), qui est branchée avec l'inductance (7) de façon à ce que, lors de la décharge de l'inductance (7), un courant ($I_L$) à travers l'inductance (7) soit appliqué à la borne de sortie (5) par l'intermédiaire de la diode (8) et

• une unité de commande (14) conçue et configurée pour le contrôle du moyen de commutation (13), l'unité de commande (14) étant conçue et configurée de façon à détecter un état de surtension (OV) par analyse d'une grandeur représentant la tension de sortie (Vout),
• l'unité de commande (14) étant conçue et configurée de façon à ce que, lors de la détection de l'état de surtension (OV), elle passe en fonctionnement en surtension et, dans le fonctionnement en surtension, elle contrôle le moyen de commutation (13) par activation et désactivation répétées, de façon à ce que la diode (8) soit conductrice et le moyen de commutation (13) est activé et désactivé, dans le fonctionnement en surtension, avec une fréquence plus faible qu'en fonctionnement normal,
• le moyen de commutation (13) étant couplé avec un point de liaison entre l'inductance (7) et la diode (8) et un dispositif de mesure (10 - 12) étant prévu pour la mesure d'une tension (Vs) appliquée au moyen de commutation (13), le dispositif de mesure (10 -12) étant conçu et configuré pour appliquer un signal de sortie mis à disposition, en tant que la grandeur de sortie représentant la tension de sortie (Vout), au dispositif de mesure (10 - 12) de l'unité de commande (14),
• moyennant quoi, en outre, l'unité de commande (14) est conçue et configurée :

• de façon à ce que le moyen de commutation (13) soit activé et désactivé de manière répétée, dans le fonctionnement en surtension, avec une fréquence déterminée et un rapport cyclique déterminé, la fréquence et le rapport cyclique étant choisis de façon à ce qu'un temps d'activation du moyen de commutation (13) dans le fonctionnement en surtension soit suffisamment long pour que la diode (8) soit conductrice et
• **caractérisé en ce que**
un temps d'activation du moyen de commutation (13) est suffisamment long, dans le fonctionnement en surtension, pour obtenir un transfert d'énergie minimal de la borne d'entrée (4) vers la borne de sortie (5).

**9.** Circuit de correction de facteur de puissance selon la revendication 8,
**caractérisé en ce que**
l'unité de commande (14) est configurée et conçue de façon à détecter, en fonctionnement normal, une diminution du courant ($I_L$) à travers l'inductance (7) jusqu'à une valeur limite de courant prédéterminée pendant une décharge de l'inductance (7) et de façon à contrôler, en fonction de cela, le moyen de commutation (13) pour le démarrage d'un nouveau processus de charge et décharge.

10. Circuit de correction de facteur de puissance (2) selon la revendication 9,
**caractérisé en ce que**
un dispositif de détection (10 - 12) couplé à l'unité de commande (14) est prévu pour la détection d'une grandeur de mesure correspondant à un passage à zéro du courant ($I_L$) à travers l'inductance (7).

11. Circuit de correction de facteur de puissance selon la revendication 8 et la revendication 9,
**caractérisé en ce que**
le dispositif de mesure et le dispositif de détection sont réalisés conjointement par un diviseur de tension (10 - 12) couplé avec un point de liaison entre l'inductance (7) et la diode (8).

12. Circuit de correction de facteur de puissance (2) selon l'une des revendications 8 à 11,
**caractérisé en ce que**
l'unité de commande (14) est conçue sous la forme d'un circuit intégré.

13. Appareil de commande (3) pour un moyen d'éclairage avec un circuit de correction de facteur de puissance (2) selon l'une des revendications 8 à 12.

FIG. 1

FIG.2

FIG.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009034350 A1

**In der Beschreibung aufgeführte Nicht-Patentliteratur**

- **L. ROSSETTO ; G. SPIAZZI ; P. TENTI.** Control Techniques For Power Factor Correction Converters. *Proc. of PEMC 94,* 1994, 1310-1318